# EUROPÄISCHE PATENTANMELDUNG

(11) **EP 4 613 680 A2**
(43) Veröffentlichungstag der Anmeldung: **10.09.2025**
(21) Anmeldenummer: 25191183.0
(22) Anmeldetag: 30.10.2019
(51) Int. Cl.: B65G 47/86, B65G 47/90

(54) **GREIFVORRICHTUNG SOWIE TRANSPORTVORRICHTUNG ZUM GREIFEN, HALTEN UND FÜHREN VON INSBESONDERE FLASCHENARTIGEN BEHÄLTERN**

(62) Teilanmeldung aus: 19206187.7
(71) Anmelder: Tyrolon GmbH, 6395 Hochfilzen (AT)
(72) Erfinder: SCHULNIG, Elmar, 6392 St. Jakob i.H. (AT)
(74) Vertreter: Meissner Bolte Partnerschaft mbB

(57) **Zusammenfassung**

Es wird eine Greifvorrichtung (2) zum Greifen, Halten und Führen von insbesondere flaschenartigen Behältern angegeben, die zumindest ein Greifarmpaar aus einem ersten Greifarm (4a) sowie einem komplementär zum ersten Greifarm (4a) ausgebildeten zweiten Greifarm (4b), wobei die Greifarme (4a, 4b) jeweils einen Grundkörper (6) und einen Greifabschnitt (8) aufweisen; zumindest ein Schließmittel (16) zum Schließen des Greifarmpaares von einer Öffnungsstellung in eine Greifstellung sowie zumindest ein Öffnungsmittel, zum Öffnen des Greifarmpaares von der Greifstellung in die Öffnungsstellung aufweist. Das zumindest eine Schließmittel (16) oder das zumindest eine Öffnungsmittel ist hierbei austauschbar an der Greifvorrichtung (2) angeordnet. Es wird ferner eine Transportvorrichtung (32) angegeben.

## Beschreibung

Die Erfindung betrifft eine Greifvorrichtung sowie eine Transportvorrichtung zum Greifen, Halten und Führen von insbesondere flaschenartigen Behältern.

Greifvorrichtungen zum Greifen, Halten und/oder Führen von insbesondere im Wesentlichen rund geformten Behältern sind bereits aus dem Stand der Technik bekannt und werden bei der fließbandtechnischen Bearbeitung derartiger Behälter verwendet.

Unter dem Begriff Behälter sind im Zusammenhang mit der vorliegenden Erfindung, insbesondere, aber nicht ausschließlich Behälter mit einem im Wesentlichen kreisförmigen Querschnitt zu verstehen, zum Beispiel Fläschchen oder Dosen oder Gläschen, die jeweils den Gepflogenheiten entsprechend aus Glas, Metall oder Kunststoff bestehen können. Unter dem Begriff "im Wesentlichen rund geformt" sind im Zusammenhang mit der vorliegenden Erfindung nicht ausschließlich im geometrischen Sinne, rund geformte Behälter zu verstehen, sondern beispielsweise auch ovale, regelmäßig vieleckige usw., welche dann insbesondere einen im Wesentlichen kreisförmigen, beispielsweise aber auch ovalen oder vieleckigen Querschnitt aufweisen.

Beim Reinigen, Befüllen oder Verschließen, werden die Behälter üblicherweise bei einer Eingangsstation mittels einer Greifvorrichtung mit mindestens einem Greifarmpaar gegriffen und zu einer nächsten Station im Bearbeitungsprozess transportiert. Eine solche Greifvorrichtung für ein Behältertransportsystem besitzt typischerweise wenigstens zwei Greifarme und kann zwischen einer Greifstellung und einer Öffnungsstellung wechseln. Um einen Behälter zu transportieren, greifen die Greifarme normalerweise unterhalb des Halskragens oder - bei Flaschen oder anderen länglichen Behältern - um den Bauch des Behälters.

Beispielsweise fungiert ein Steuernocken hierbei als Öffnungsmittel und eine Feder als Schließmittel für die Greifvorrichtung. Wenn hierbei die Greifvorrichtung durch den Steuernocken geöffnet wird, wird eine Kraft gegen eine Greifarminnenseite des Greifarms entgegen der Federkraft aufgewendet. Der Steuernocken drückt also mit anderen Worten entgegen der Federkraft das Greifarmpaar auseinander.

Die Federkraft der Feder dient nicht nur dem Schließen der Greifvorrichtung, sondern auch dem kraftschlüssigen Halten des Behälters. Daher ist die Federkraft entsprechend ausgebildet.

Insbesondere, wenn der Behälter im Bauch gefasst werden soll, muss die Greifvorrichtung geeignet sein, den Behälter in einer bestimmten, insbesondere senkrechten Lage stabil festzuhalten. Eine hohe Drehgeschwindigkeit einer Transportvorrichtung, welche beispielsweise eine Vielzahl von insbesondere kreisförmig angeordneten Greifvorrichtungen aufweist, verleiht insbesondere schweren und/oder gefüllten Behältern eine Beschleunigung, die entlang der Längsachse des Behälters aufgrund der Form und/oder der Befüllung des Behälters unterschiedlich ausfallen kann. In Abhängigkeit hierzu können dann verschiedene, starke Kräfte auf die Greifvorrichtung ausgeübt werden.

Weiterhin kann jedoch auch bei einer linearen Bewegung der Greifvorrichtung ein Behälter eine Anfangs-, bzw. Endbeschleunigung erfahren und somit Kräfte auf die Greifvorrichtung ausüben.

Daher werden normalerweise Greifabschnitte der Greifarme verwendet, die eine auf den Bauch des Behälters passgenau Form aufweisen und/oder an verschiedenen Stellen des Bauchs mittels mehrerer Greiffinger des Greifabschnitts entlang der Längsachse des Behälters zu greifen. Ein Schwenken des Behälters um seine Längsachse kann somit unterdrückt bzw. der Behälter beim Transport in seiner Lage stabilisiert werden.

Ein anderer Aspekt der stabilen und sicheren Lagerung sowie des stabilen und sicheren Transports des Behälters besteht darin, dass Schließmittel Hinsichtlich seiner Art und/oder seiner aufbringbaren Schließkraft entsprechend auszubilden, um die Greifvorrichtung an unterschiedliche Behältertypen und/oder Transport-, bzw. Verfahrensgegebenheiten anzupassen. Dies erfolgt üblicherweise jedoch im Rahmen der Herstellung der Greifvorrichtung, also vor einer Auslieferung zu einem Kunden. Eine nachträgliche Anpassung, beispielsweise aufgrund sich ändernder Behältergrößen, ist hierbei mit einem großen Zeit- und Kostenaufwand verbunden, der durch die lange Standzeit der Greifvorrichtung bedingt ist.

Ausgehend hiervon liegt der Erfindung. Daher die Aufgabe zugrunde, eine Greifvorrichtung sowie eine Transportvorrichtung anzugeben, bei der zumindest ein Schließmittel auf einfache Weise und schnell ausgetauscht werden kann.

Mit Blick auf die Greifvorrichtung wird die Aufgabe erfindungsgemäß gelöst durch eine Greifvorrichtung mit den Merkmalen des Anspruchs 1. Mit Blick auf die Transportvorrichtung wird die Aufgabe erfindungsgemäß gelöst durch eine Transportvorrichtung mit den Merkmalen des Anspruchs 8.

Vorteilhafte Ausgestaltungen, Weiterbildungen sowie Varianten sind Gegenstand der Unteransprüche.

Die im Hinblick auf die Greifvorrichtung aufgeführten Vorteile und bevorzugten Ausgestaltungen sind sinngemäß auf die Transportvorrichtung zu übertragen und umgekehrt.

Konkret wird die auf die Greifvorrichtung gerichtete Aufgabe gelöst durch eine Greifvorrichtung zum Greifen, Halten und Führen von insbesondere flaschenartigen Behältern, wobei die Greifvorrichtung zumindest ein Greifarmpaar aus einem ersten Greifarm sowie einem komplementär zu dem ersten Greifarm ausgebildeten zweiten Greifarm aufweist. Hierbei weisen die Greifarme jeweils einen Grundkörper und einen an dem jeweiligen Grundkörper angeordneten Greifabschnitt auf. Unter komplementär wird hierbei im Zusammenhang mit der vorliegenden Erfindung verstanden, dass die beiden Greifabschnitte derart geometrisch ausgestaltet sind, dass sie im Wesentlichen an eine Außenkontur der insbesondere flaschenartigen Behälter angepasst sind.

Weiterhin weist die Greifvorrichtung zumindest ein Schließmittel zum Schließen des Greifarmpaares von einer Öffnungsstellung in eine Greifstellung auf. Ferner weist die Greifvorrichtung ebenfalls zumindest ein Öffnungsmittel zum Öffnen des Greifarmpaares von der Greifstellung in die Öffnungsstellung auf.

Weitere Ausführungen zu einem allgemeinen Aufbau einer Greifvorrichtung sind beispielsweise aus der DE 10 2014 111 564 A1 oder aus der EP 2 774 877 B1 zu entnehmen, die beide auf die Anmelderin zurückgehen und auf die insoweit an dieser Stelle Bezug genommen wird.

Erfindungsgemäß ist das zumindest eine Schließmittel oder das zumindest eine Öffnungsmittel austauschbar an der Greifvorrichtung und speziell an den Grundkörpern angeordnet. Unter austauschbar wird im Zusammenhang mit der vorliegenden Erfindung verstanden, dass das zumindest eine Schließmittel oder das zumindest eine Öffnungsmittel speziell von der Greifvorrichtung auf eine einfache Weise abmontierbar, ist, ohne die Greifvorrichtung zu beschädigen. Das zumindest eine Schließmittel oder das zumindest eine Öffnungsmittel ist somit insbesondere reversibel an der Greifvorrichtung angeordnet. D.h. es ist speziell beispielsweise keine stoffschlüssige oder eine andere Art der Verbindung zwischen dem zumindest einen Schließmittel oder dem zumindest einen Öffnungsmittel und der Greifvorrichtung vorgesehen, die lediglich durch eine (Teil-)Beschädigung zumindest eines der Bauteile (Greifvorrichtung oder die beiden Grundkörper) lösbar wäre.

Weiterhin wird hierbei unter austauschbar verstanden, dass beispielsweise mehrere Schließmittel oder mehrere Öffnungsmittel mit jeweils unterschiedlichen Parametern vorgesehen sein können, welche wahlweise auf ein und dieselbe Greifvorrichtung montiert sind. Unter den unterschiedlichen Parametern können im Zusammenhang mit der vorliegenden Erfindung beispielsweise mechanische Eigenschaften, z.B. der Betrag einer Schließ- oder Öffnungskraft, des zumindest einen Schließmittel bzw. des zumindest einen Öffnungsmittels verstanden werden.

Hierdurch ist zum einen eine Anpassung der Greifvorrichtung hinsichtlich eines geeigneten Schließ- oder Öffnungsmittels, was im weiteren Verlauf der Beschreibung noch näher erläutert wird, beispielsweise im Hinblick auf eine kundenspezifisch erforderliche Schließ- oder Öffnungskraft ermöglicht. Somit sind auch beispielsweise bereits sich beim Kunden und im Betrieb befindliche Greifvorrichtung auf eine einfache Weise und vor allem aufwandsarm und schnell an sich ändernde Gegebenheiten anpassbar.

Zum anderen ist es ermöglicht, dass beispielsweise bei einem Bruch oder einem Verschleiß des zumindest einen Schließmittels oder des zumindest einen Öffnungsmittels ein einfacher und schneller Austausch ermöglicht ist.

In einer Ausführungsform ist das zumindest eine Schließmittel oder das zumindest eine Öffnungsmittel als eine Feder und insbesondere als eine Schenkelfeder mit einem ersten und in einem zweiten Schenkel ausgebildet. Hierbei ist bevorzugt jeweils ein Schenkel an einem der Grundkörper der Greifarme angeordnet, sodass hierbei ein Schließen (im Falle des Schließmittels) oder ein Öffnen (im Falle des Öffnungsmittels) des Greifarmpaares durch die Feder realisiert ist. Federn und insbesondere Schenkelfedern haben sich als Schließmittel bzw. Öffnungsmittel als vorteilhaft erwiesen. Sie sind fernen in nahezu allen geometrischen Ausgestaltungen und auch mit unterschiedlichen Federkonstanten auf dem freien Markt kostengünstig erhältlich. Für den Fall, dass die Feder als Öffnungsmittel dient, dient - entgegen der eingangs beschriebenen Ausführungsform - der Steuernocken als Schließmittel.

Gemäß einer alternativen Ausführungsform ist das zumindest eine Schließmittel oder das zumindest eine Öffnungsmittel als ein Magnetpaar mit einem ersten Magneten und einem zweiten Magneten ausgebildet. Analog zu den zuvor erwähnten Schenkeln ist hierbei jeweils ein Magnet an einem Grundkörper der Greifarme angeordnet, sodass im Falle der Ausbildung des Schließmittel als Magnetpaar ein zuverlässiges Schließen des Greifarmpaares realisiert ist und analog bei Ausbildung des zumindest einen Öffnungsmittels als Magnetpaar ein verlässliches Öffnen und somit ein Verfahren des Greifarmpaares in die Öffnungsstellung ermöglicht ist. Eine Ausbildung des zumindest einen Öffnungsmittels als Magnetpaar ist beispielsweise aus der EP 2 769 941 A1 zu entnehmen, die auf die Anmelderin zurückgeht und auf die insoweit Bezug genommen wird. Auch in diesem Fall, dient der eingangs erwähnte Steuernocken dann als Schließmittel.

Weiterhin ist es selbsterklärend, dass es sich bei dem als Schließmittel ausgebildeten Magnetpaar um ein sich anziehendes Magnetpaar handelt und bei dem als Öffnungsmittel ausgebildeten Magnetpaar um ein sich abstoßendes Magnetpaar handelt.

Auch Magnete und speziell Magnetpaare haben sich als Schließmittel bzw. Öffnungsmittel als geeignet erwiesen.

Durch die wahlweise austauschbare Ausgestaltung des zumindest einen Schließmittels oder des zumindest einen Öffnungsmittels ist somit eine einfache und kostengünstige Anpassung der Greifvorrichtung an Kundenwünsche oder geometrische Anforderungen ermöglicht.

Besonders bevorzugt ist das zumindest eine Schließmittel oder das zumindest eine Öffnungsmittel werkzeuglos austauschbar an dem jeweiligen Grundkörper des Greifarms angeordnet. Unter werkzeuglos wird im Zusammenhang mit der vorliegenden Erfindung verstanden, dass das zumindest eine Schließmittel oder das zumindest eine Öffnungsmittel bevorzugt ohne spezielles oder schweres Werkzeug, wie beispielsweise besondere Zangen oder Schraubenschlüssel austauschbar ist. Das zumindest eine Schließmittel oder das zumindest eine Öffnungsmittels ist somit vereinfacht gesprochen vorzugsweise lediglich mittels Standardwerkzeug, wie beispielsweise einem einfachen Schraubendreher oder insbesondere sogar gänzlich ohne Werkzeug "von Hand" austauschbar. Dies optimiert den bereits vorstehend erwähnten einfachen Austausch des zumindest einen Schließmittels oder des zumindest einen Öffnungsmittels und optimiert weiterhin die bereits erwähnte Zeitersparnis bei dem Austausch.

In einer Ausführungsform ist das zumindest eine Schließmittel oder das zumindest eine Öffnungsmittel an einer Oberseite der Greifvorrichtung und insbesondere an einer Oberseite des jeweiligen Grundkörpers angeordnet und speziell aufsetzbar. Weiterhin bevorzugt ist das zumindest eine Schließmittel oder das zumindest eine Öffnungsmittel freiliegend an der Oberseite der Greifvorrichtung und insbesondere an der Oberseite des jeweiligen Grundkörpers angeordnet. Unter freiliegend wird im Zusammenhand mit der vorliegenden Erfindung verstanden, dass das zumindest eine Schließmittel oder das zumindest eine Öffnungsmittel nicht von weiteren Bauteilen der Greifvorrichtung ver- oder abgedeckt ist, sondern vielmehr einfach zugänglich.

Hierdurch ist ein einfacher Zugang zu dem zumindest einen Schließmittel oder dem zumindest einen Öffnungsmittel realisiert, was die Austauschbarkeit des zumindest einen Schließmittel oder des zumindest einen Öffnungsmittel weiter vereinfacht und optimiert. Es müssen hierbei beispielsweise keine das zumindest eine Schließmittels oder das zumindest eine Öffnungsmittel bedeckenden Bauteile zuerst entfernt werden.

Zweckdienlicherweise weist der Grundkörper jeweils zumindest eine Aufnahme für das zumindest eine Schließmittel oder das zumindest eine Öffnungsmittel auf. Im Falle, dass es sich bei dem Schließmittel oder dem zumindest einen Öffnungsmittel um eine Feder handelt, ist die Aufnahme beispielsweise in Form eines Stifts ausgebildet, in den ein bevorzugt nach Art einer Öse ausgebildetes Ende eines jeweiligen Schenkels der Feder aufsteckbar ist. Im Falle, dass sich bei dem zumindest einen Schließmittel oder dem zumindest einen Öffnungsmittel um ein Magnetpaar handelt, ist die zumindest eine Aufnahme beispielsweise als Loch ausgebildet, in die ein an jeweils den ersten und den zweiten Magneten des Magnetpaars angeformter oder angeordneter Stift einsetzbar ist.

Alternativ oder ergänzend kann die Aufnahme derart ausgestaltet sein, dass sie sowohl zur Aufnahme einer als Feder oder Magnetpaar ausgebildeten Schließmittels oder Öffnungsmittels dienen kann.

Die Ausgestaltung der zumindest einen Aufnahme trägt somit den unterschiedlichen und zuvor erwähnten Ausgestaltungen des zumindest einen Schließmittels oder des zumindest einen Öffnungsmittels dahingehend Rechnung, dass die Greifvorrichtung an die jeweiligen Anforderungen konfiguriert werden kann.

Die mit Blick auf die Transportvorrichtung gerichtete Aufgabe wird konkret gelöst durch eine Transportvorrichtung, die zumindest eine Greifvorrichtung der zuvor beschriebenen Art aufweist. Hierbei sind vorzugsweise mehrere Greifvorrichtungen in einer Umfangsrichtung der Transportvorrichtung, welche vorzugsweise kreisförmig ausgebildet ist, angeordnet. Die Greifarme sind hierbei derart an der Transportvorrichtung angeordnet, dass die Greifabschnitte radial nach außen gerichtet sind. Aufgrund der sich daraus ergebenden Form der Transportvorrichtung wird diese auch als Transportstern bezeichnet.

Ausführungsbeispiele der Erfindung werden nachfolgend anhand der Figuren näher erläutert. Diese zeigen teilweise stark vereinfachten Darstellungen:
- Fig. 1a: eine perspektivische Ansicht auf eine erfindungsgemäße Greifvorrichtung mit einem Schließmittel gemäß einer ersten Ausführungsform,
- Fig. 1b: eine perspektivische Ansicht auf die erfindungsgemäße Greifvorrichtung mit einem Schließmittel gemäß einer zweiten Ausführungsform,
- Fig. 2a: eine perspektivische Ansicht auf eine erfindungsgemäße Transportvorrichtung gemäß einer ersten Ausführungsform sowie
- Fig. 2b: eine perspektivische Ansicht auf eine erfindungsgemäße Transportvorrichtung gemäß einer zweiten Ausführungsform.

In den Figuren sind gleichwirkende Teile stets mit den gleichen Bezugszeichen dargestellt.

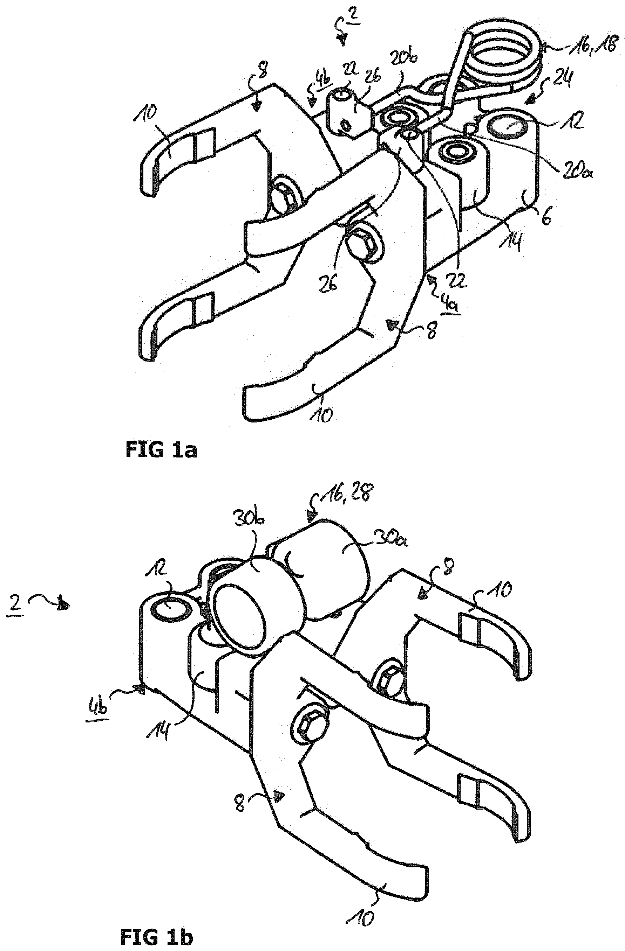

Die in Fig. 1a gezeigte Greifvorrichtung 2 ist zum Greifen, Halten und Führen von insbesondere flaschenartigen Behältern (nicht dargestellt) ausgebildet. Hierzu weist die Greifvorrichtung 2 in der in Fig. 1a gezeigten ersten Ausführungsform ein Greifarmpaar aus einem ersten Greifarm 4a und einem zweiten Greifarm 4b auf. Der zweite Greifarm 4b ist zum ersten Greifarm 4a komplementär ausgebildet, d.h. die beiden Greifarme 4a, 4b sind derart ausgebildet, dass sie eine Umfangskontur eines flaschenartigen Behälters greifen, halten und führen können. In Fig. 1a ist die Greifvorrichtung 2 in einer Greifstellung gezeigt.

Die beiden Greifarme 4a, 4b weisen jeweils einen Grundkörper 6 sowie einen Greifabschnitt 8 auf. Der Greifabschnitt 8 ist an dem Grundkörper 6 angeordnet und im Wesentlichen gabelartig ausgebildet. D.h. der Greifabschnitt 8 weist zumindest zwei Greiffinger 10 auf. Der Greifabschnitt 8 kann darüber hinaus auch um eine Schwenkachse (nicht dargestellt) in und entgegen einer Schwenkrichtung schwenkbar an dem Grundkörper 6 gelagert angeordnet sein.

Vorzugsweise ist der Greifabschnitt 8 einstückig, also monolithisch ausgebildet und weist einen Kunststoff auf. Speziell ist der Greifabschnitt 8 aus einem Kunststoff, z.B. ein faserverstärktes Polyetheretherketon gebildet.

Ferner weist die Greifvorrichtung 2 zumindest eine nicht gezeigte Lagereinheit auf, die einem Lagern der Greifarme 4a, 4b dient. Hierzu weist die Lagereinheit zwei Lagerbolzen und einen Lagerkörper auf (nicht dargestellt). Die Lagerbolzen dienen einer Aufnahme der Greifarme 4a, 4b und speziell der Grundkörper 6. Hierzu weisen die Grundkörper 6 jeweils eine Bohrung 12 auf, in der die Lagerbolzen gesteckt werden. Die Grundkörper 6 sind hierbei rotierbar auf den Lagerbolzen gelagert.

Zum Verstellen des Greifarmpaares von der Greifstellung in eine Öffnungsstellung ist ein Steuernocken (nicht dargestellt) vorgesehen, der mit zumindest einer Betätigungsrolle 14 je eines Greifarms 4a, 4b in Wirkverbindung steht. Mit anderen Worten drückt der Steuernocken gegen die Betätigungsrollen 14 der Greifarme 4a, 4b und drückt diese somit in die Öffnungsstellung auseinander. Der Steuernocken wird aus diesem Grund auch als Öffnungsmittel bezeichnet.

Um die Greifarme 4a, 4b erneut von der Öffnungsstellung in die Greifstellung zu verstellen, weist die Greifvorrichtung 2 zumindest ein Schließmittel 16 auf. Das Ausführungsbeispiel gemäß Fig. 1a zeigt genau ein Schließmittel 16 gemäß einer ersten Ausführungsform. Das Schließmittel 16 ist hier als eine Feder 18 speziell als eine Schenkelfeder mit zwei Schenkeln 20a, 20b ausgebildet. Jeweils ein Schenkel 20a, 20b ist an einem Grundkörper 6 der Greifvorrichtung 2 angeordnet. Hierzu weisen die Grundkörper 6 zumindest eine Aufnahme 22 für das Schließmittel 16 und speziell für die beiden Schenkeln 20a, 20b auf. Die Aufnahme 22 ist im Ausführungsbeispiel gemäß Fig. 1a stiftartig ausgebildet. Die Aufnahme 22 ist an einer Oberseite 24 der Grundkörper 6 angeordnet, was eine Zugänglichkeit zu dem Schließmittel 16 vorteilhaft macht.

Die Feder 18 ist derart ausgestaltet, dass sie eine Federkraft auf die Greifarme 4a, 4b ausübt, wenn diese sich in der Öffnungsstellung befinden. Mit anderen Worten ist die Feder 18 derart ausgestaltet, dass sie die beiden Greifarme 4a, 4b zusammendrückt und somit von der Öffnungsstellung in die Greifstellung verstellt. Die Federkraft dient hierbei nicht allein einem Verstellen in die Greifstellung. Sie dient vielmehr auch einem Aufbringen einer Haltekraft eines zwischen den Greifabschnitten 8 gegriffenen Behälters und ist deswegen betragsmäßig entsprechend ausgestaltet.

Nachfolgend wird die erfinderische Idee anhand des Schließmittels 16 näher erläutert. Das nachfolgend Aufgeführte gilt jedoch ebenso gleichwirkend als mögliche Ausgestaltung des Öffnungsmittels.

Erfindungsgemäß ist das als Feder 18 ausgebildete Schließmittel 16 gemäß Fig. 1a austauschbar und speziell werkzeuglos austauschbar an der Greifvorrichtung 2 und insbesondere an den Grundkörpern 6 angeordnet. Hierzu weist das Schließmittel 16 beispielsweise ösenartige Haltemittel 26 auf, mit denen es auf die stiftartigen Aufnahmen 22 gesteckt ist. Diese Ausgestaltung hat sich im Hinblick auf eine werkzeuglose und austauschbare sowie zugleich im Hinblick auf eine sichere Anordnung des Schließmittels 16 als vorteilhaft erwiesen. Unter werkzeuglos und austauschbar wird hiermit somit verstanden, dass zu einem Austausch des Schließmittels 16 kein Werkzeug notwendig ist und dieses darüber hinaus einfach und ohne die Greifvorrichtung 2 zu beschädigen abmontiert oder anmontiert werden kann.

In Fig. 1b ist eine Greifvorrichtung 2 mit einem Schließmittel 16 gemäß einer zweiten Ausführungsform gezeigt. Die Greifvorrichtung 2 gemäß Fig. 1b entspricht im Wesentlichen der Greifvorrichtung 2 gemäß Fig. 1a, weswegen nachfolgend lediglich auf die Unterschiede eingegangen wird.

Dieser besteht darin, dass das Schließmittel 16 in dieser Ausführungsform als ein Magnetpaar 28 ausgebildet ist. Das Magnetpaar 28 weist einen ersten Magneten 30a auf, der an dem Grundkörper 6 des ersten Greifarms 4a angeordnet ist. Zudem weist das Magnetpaar 28 einen zweiten Magneten 30b auf, der an dem Grundkörper 6 des zweitem Greifarms 4b angeordnet ist.

Das Magnetpaar 28 ist in der hier gezeigten Ausführungsform als ein sich anziehendes Magnetpaar 28 ausgebildet. D.h. die beiden Magnete 30a, 30b ziehen sich gegenseitig an, was insbesondere bei der sich in der Öffnungsstellung befindlichen Greifvorrichtung 2 zu einem zuverlässigen Verstellen in die Greifstellung (in Fig. 1b dargestellt) führt. Analog zu der Ausgestaltung des Schließmittels 16 als Feder 18 (vgl. Fig. 1a) ist die Anziehungskraft des Magnetpaares 28 ebenfalls entsprechend ausgelegt, dass durch sie auch ein zuverlässiges Halten eines gegriffenen Behälters sichergestellt ist.

Weiterhin sind die beiden Magnete 30a, 30b derart bevorzugt an der Oberseite 24 der Grundkörper 6 angeordnet, dass sie in eine (verdeckte) Öffnung in der Mitte der Betätigungsrollen 14 eingesteckt werden. Hierzu weisen die Magnete 30a, 30b vorzugsweise eine stiftartige Ausformung auf (ebenfalls nicht sichtbar).

Das als Magnetpaar 28 ausgebildete Schließmittel 16 gemäß Fig. 1b ist ebenfalls insbesondere werkzeuglos austauschbar angeordnet, was einen einfachen und schnellen Wechsel oder Austausch des Schließmittels ermöglicht. Unter dem Austausch des Schließmittels kann hierbei verstanden werden, dass lediglich ein Schließmittel mit anderen Parametern, also beispielsweise einer anderen Schließkraft, angeordnet wird. Die Art (Magnetpaar oder Feder) des Schließmittels ändert sich jedoch nicht.

Unter dem Wechsel des Schließmittels 16 kann hierbei verstanden werden, dass sich die Art des Schließmittels ändert. Beispielsweise wird hierbei ein als Magnetpaar 28 ausgebildetes Schließmittel 16 durch ein als eine Feder 18 ausgebildetes Schließmittel 16 ersetzt oder umgekehrt. Die Greifvorrichtung 2 und speziell die Grundkörper 6 sind hierbei modular, also zur Aufnahme von beiden Varianten von Schließmitteln 16 ausgebildet. Somit ist es weiterhin beispielsweise ermöglicht, lediglich durch einen Wechsel des Schließmittels 16 von der Ausführungsform gemäß Fig. 1a zu der Ausführungsform gemäß Fig. 1b zu gelangen.

Durch die werkzeuglose und austauschbare Anordnung der verschieden ausgebildeten Schließmittel 16 ist somit die Greifvorrichtung 2 an verschiedene Kundenwünsche und technische Anforderungen anpassbar, wobei im Wesentlichen immer auf ein und denselben Grundkörper 6 zurückgegriffen wird, was zum einen eine Herstellung im Hinblick auf Kosten und Aufwand deutlich vereinfacht. Zum anderen ist weiterhin eine Anpassung bereits sich in Betrieb befindlicher Greifvorrichtungen 2 an sich ändernde Anforderungen oder Gegebenheiten einfach realisiert. Durch die werkzeuglose Austauschbarkeit ist hierbei zusätzlich eine Stillstandzeit der Greifvorrichtung 2 deutlich reduziert, da die Schließmittel 16 einfach und schnell "von Hand" getauscht werden können.

Alternativ sind die vorstehend beschriebenen Ausgestaltungen des Schließmittels 16 als Magnetpaar 28 oder als Feder 18 - wie bereits eingangs erwähnt - auch auf eine Ausgestaltung des nicht gezeigten Öffnungsmittels übertragbar, sodass die vorstehenden Ausführungen und Vorteile der austauschbaren Schließmittel 16 in analoger Weise auch auf Ausgestaltungen des Öffnungsmittels anwendbar sind.

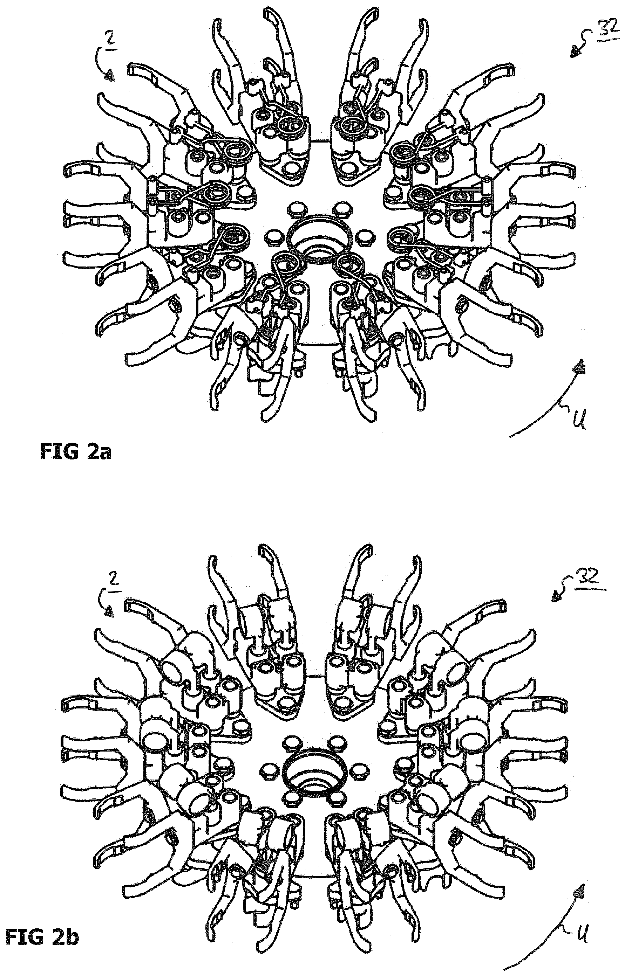

Fig. 2a zeigt eine Transportvorrichtung 32 gemäß einer ersten Ausführungsform. Die Transportvorrichtung 32 weist hierbei in einer Umfangsrichtung U angeordnete Greifvorrichtungen 2 gemäß der ersten Ausführungsform (vgl. Fig. 1a) auf. D.h. die Greifvorrichtungen 2, konkret die zehn Greifvorrichtungen 2, der Transportvorrichtung 32 gemäß Fig. 2a weisen ein als Feder 18 ausgebildetes Schließmittel 16 auf.

Zudem sind die Greifvorrichtungen 2 derart an der Transportvorrichtung 32 angeordnet, dass die Greifabschnitte 8 radial nach außen gerichtet sind, um die insbesondere flaschenartigen Behälter (nicht gezeigt) im Betrieb der Transportvorrichtung 32 zu greifen, zu halten und zu führen.

In Fig. 2b ist eine Transportvorrichtung 32 gemäß einer zweiten Ausführungsform dargestellt. Die Transportvorrichtung 32 gemäß der zweiten Ausführungsform entspricht im Wesentlichen der in Fig. 2a gezeigten Transportvorrichtung 32. Sie weist ebenso mehrere, konkret zehn, Greifvorrichtungen 2 auf, die in Umfangsrichtung U an der Transportvorrichtung 32 angeordnet sind. Jedoch sind die Schließmittel 16 bei der Transportvorrichtung 32 gemäß der zweiten Ausführungsform als Magnetpaare 28 ausgebildet.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

Ausführungen können den folgenden Aspekten entsprechen:
1. Greifvorrichtung (2) zum Greifen, Halten und Führen von insbesondere flaschenartigen Behältern aufweisend:
   - zumindest ein Greifarmpaar aus einem ersten Greifarm (4a) sowie einem komplementär zum ersten Greifarm (4a) ausgebildeten zweiten Greifarm (4b), wobei die Greifarme (4a, 4b) jeweils einen Grundkörper (6) und einen Greifabschnitt (8) aufweisen,
   - zumindest ein Schließmittel (16) zum Schließen des Greifarmpaares von einer Öffnungsstellung in eine Greifstellung sowie
   - zumindest ein Öffnungsmittel, zum Öffnen des Greifarmpaares von der Greifstellung in die Öffnungsstellung,
      **dadurch gekennzeichnet,** dass
      das zumindest eine Schließmittel (16) oder das zumindest eine Öffnungsmittel austauschbar an der Greifvorrichtung (2) angeordnet ist.
2. Greifvorrichtung (2) nach Aspekt 1,
   **dadurch gekennzeichnet,** dass
   das zumindest eine Schließmittel (16) oder das zumindest eine Öffnungsmittel als eine Feder (18), insbesondere als eine Schenkelfeder ausgebildet ist.
3. Greifvorrichtung (2) nach Aspekt 1
   **dadurch gekennzeichnet,** dass
   das zumindest eine Schließmittel (16) oder das zumindest eine Öffnungsmittel als ein Magnetpaar (28) mit einem ersten Magneten (30a) und einem zweiten Magneten (30b) ausgebildet ist.
4. Greifvorrichtung (2) nach einem der vorhergehenden Aspekte,
   **dadurch gekennzeichnet,** dass
   das zumindest eine Schließmittel (16) oder das zumindest eine Öffnungsmittel werkzeuglos austauschbar angeordnet ist.
5. Greifvorrichtung (2) nach einem der vorhergehenden Aspekte,
   **dadurch gekennzeichnet,** dass
   das zumindest eine Schließmittel (16) oder das zumindest eine Öffnungsmittel an einer Oberseite (24) der Greifvorrichtung (2), insbesondere des Grundkörpers (6) angeordnet ist.
6. Greifvorrichtung (2) nach einem der vorhergehenden Aspekte,
   **dadurch gekennzeichnet,** dass
   das zumindest eine Schließmittel (16) oder das zumindest eine Öffnungsmittel freiliegend an der Greifvorrichtung (2) angeordnet ist.
7. Greifvorrichtung (2) nach einem der vorhergehenden Askepte,
   **dadurch gekennzeichnet,** dass
   die Grundkörper (6) jeweils zumindest eine Aufnahme (22) für das zumindest eine Schließmittel (16) oder das zumindest eine Öffnungsmittel aufweisen.
8. Transportvorrichtung (32) zum Greifen, Halten und Führen von insbesondere flaschenartigen Behältern, wobei in einer Umfangsrichtung (U) der Transportvorrichtung wenigstens eine Greifvorrichtung (2), insbesondere nach einem der Aspekte 1 bis 7 angeordnet ist, derart, dass das zumindest eine Greifarmpaar der Greifvorrichtung (2) radial nach außen gerichtet ist.

### Bezugszeichenliste

- 2: Greifvorrichtung
- 4a: erster Greifarm
- 4b: zweiter Greifarm
- 6: Grundkörper
- 8: Greifabschnitt
- 10: Greiffinger
- 12: Bohrung
- 14: Betätigungsrolle
- 16: Schließmittel
- 18: Feder
- 20a,b: Schenkel der Feder
- 22: Aufnahme
- 24: Oberseite
- 26: ösenartige Haltemittel
- 28: Magnetpaar
- 30a: erster Magnet
- 30b: zweiter Magnet
- 32: Transportvorrichtung

- U: Umfangsrichtung

## Patentansprüche

1. Greifvorrichtung (2) zum Greifen, Halten und Führen von insbesondere flaschenartigen Behältern aufweisend:
- zumindest ein Greifarmpaar aus einem ersten Greifarm (4a) sowie einem komplementär zum ersten Greifarm (4a) ausgebildeten zweiten Greifarm (4b), wobei die Greifarme (4a, 4b) jeweils einen Grundkörper (6) und einen Greifabschnitt (8) aufweisen, und wobei die Greifarme (4a, 4b) jeweils eine Betätigungsrolle (14) aufweisen,
- zumindest ein Schließmittel (16) zum Schließen des Greifarmpaares von einer Öffnungsstellung in eine Greifstellung sowie
- zumindest ein Öffnungsmittel, wobei das Öffnungsmittel mit den Betätigungsrollen (14) der Greifarme (4a, 4b) in Wirkverbindung stehen, und wobei das Öffnungsmittel ausgelegt ist, um durch Drücken des Öffnungsmittels gegen die Betätigungsrollen (14) das Greifarmpaar von der Greifstellung in die Öffnungsstellung zu drücken.

2. Greifvorrichtung (2) nach Anspruch 1,
**dadurch gekennzeichnet, dass**
das Öffnungsmittel ein Steuernocken ist.

3. Greifvorrichtung (2) nach Anspruch 1 oder 2,
**dadurch gekennzeichnet, dass**
das zumindest eine Schließmittel (16) als eine Feder (18), insbesondere als eine Schenkelfeder ausgebildet ist.

4. Greifvorrichtung (2) nach Anspruch 1
**dadurch gekennzeichnet, dass**
das zumindest eine Schließmittel (16) als ein Magnetpaar (28) mit einem ersten Magneten (30a) und einem zweiten Magneten (30b) ausgebildet ist.

5. Greifvorrichtung (2) nach einem der vorhergehenden Ansprüche,
**dadurch gekennzeichnet, dass**
das zumindest eine Schließmittel (16) oder das zumindest eine Öffnungsmittel werkzeuglos austauschbar angeordnet ist.

6. Greifvorrichtung (2) nach einem der vorhergehenden Ansprüche,
**dadurch gekennzeichnet, dass**
das zumindest eine Schließmittel (16) oder das zumindest eine Öffnungsmittel an einer Oberseite (24) der Greifvorrichtung (2), insbesondere des Grundkörpers (6) angeordnet ist.

7. Greifvorrichtung (2) nach einem der vorhergehenden Ansprüche,
**dadurch gekennzeichnet, dass**
das zumindest eine Schließmittel (16) oder das zumindest eine Öffnungsmittel freiliegend an der Greifvorrichtung (2) angeordnet ist.

8. Greifvorrichtung (2) nach einem der vorhergehenden Ansprüche,
**dadurch gekennzeichnet, dass**
die Grundkörper (6) jeweils zumindest eine Aufnahme (22) für das zumindest eine Schließmittel (16) oder das zumindest eine Öffnungsmittel aufweisen.

9. Greifvorrichtung (2) nach Anspruch 8,
**dadurch gekennzeichnet, dass**
die Aufnahme ein Stift ist, wobei ein Ende des Öffnungsmittels oder Schließmittels auf den Stift aufsteckbar ist.

10. Greifvorrichtung (2) nach Anspruch 8,
**dadurch gekennzeichnet, dass**
die Aufnahme als Loch ausgebildet ist, wobei ein Ende des Öffnungsmittels oder Schließmittels auf den Stift aufsteckbar.

11. Transportvorrichtung (32) zum Greifen, Halten und Führen von insbesondere flaschenartigen Behältern, wobei in einer Umfangsrichtung (U) der Transportvorrichtung wenigstens eine Greifvorrichtung (2), insbesondere nach einem der Ansprüche 1 bis 7 angeordnet ist, derart, dass das zumindest eine Greifarmpaar der Greifvorrichtung (2) radial nach außen gerichtet ist.
